# EUROPÄISCHE PATENTSCHRIFT

(11) **EP 3 327 199 B1**
(45) Veröffentlichungstag und Bekanntmachung des Hinweises auf die Patenterteilung: **31.07.2019**
(21) Anmeldenummer: 17202991.0
(22) Anmeldetag: 22.11.2017
(51) Int. Cl.: E01C 23/088, G06Q 10/08, B65G 67/22

(54) **SYSTEM UND VERFAHREN ZUM NACHVERFOLGEN VON FRÄSGUT**
SYSTEM AND METHOD FOR TRACKING MILLED MATERIAL
SYSTÈME ET PROCÉDÉ DE SUIVI DE DÉBRIS DE FRAISAGE

(30) Priorität: 25.11.2016 DE 102016223454
(43) Veröffentlichungstag der Anmeldung: 30.05.2018
(73) Patentinhaber: Wirtgen GmbH, 53578 Windhagen (DE)
(72) Erfinder: Berning, Christian, 53909 Zülpich (DE); Menzenbach, Christoph, 53577 Neustadt/Wied (DE); Barimani, Cyrus, 53639 Königswinter (DE)
(74) Vertreter: dompatent von Kreisler Selting Werner - Partnerschaft von Patent- und Rechtsanwälten mbB

(56) Entgegenhaltungen:
- EP-A2- 3 040 477
- DE-A1-102011 113 752
- DE-A1-102012 017 337
- DE-A1-102015 005 194

## Beschreibung

Die Erfindung betrifft ein System nach dem Oberbegriff des Anspruchs 1 sowie ein Verfahren zum Nachverfolgen von Fräsgut nach dem Oberbegriff des Anspruchs 13.

Es sind Fräsmaschinen gemäß DE 10 2012 017 337 A1, DE 10 2011 113 752 A1, DE 10 2015 005 194 A1 und EP 3 040 477 A2 bekannt, mit denen Abschnitte eines Bodenbelags in einem Fräsbetrieb gefräst werden können. Ferner wird das beim Fräsen des Abschnitts des Bodenbelags abgetragene Fräsgut auf ein Transportmittel, insbesondere einem LKW geladen und abtransportiert. Das auf dem Transportmittel abtransportierte Fräsgut wird an einer Ablagestelle abgelegt. Es ist bekannt mit einer Erfassungseinrichtung das Fräsgut betreffende Datensignale zu erfassen. Dabei werden beispielsweise Frästiefe und abgetragenes Fräsvolumen erfasst.

Es besteht jedoch zunehmend Bedarf, das abgetragene Fräsgut wieder zu recyceln.

Aufgabe der vorliegenden Erfindung ist es daher, ein System und ein Verfahren zu schaffen, mit dem die Recyclingmöglichkeiten des Fräsguts verbessert werden kann.

Zur Lösung dieser Aufgabe dienen die Merkmale der Ansprüche 1 und 13.

Die Erfindung sieht in vorteilhafter Weise vor, dass die Erfassungseinrichtung die das Fräsgut betreffenden Datensignale an eine Kennzeichnungseinrichtung überträgt und die Kennzeichnungseinrichtung abhängig von den übertragenen das Fräsgut betreffenden Datensignale das auf dem Transportmittel abgelegte Fräsgut oder das mit dem Fräsgut belade Transportmittel mit einem Markierungsmittel kennzeichnet.

Auf diese Weise können die das Fräsgut betreffenden Datensignale einem Fräsgut zugeordnet werden.

Das Transportmittel kann beispielsweise ein LKW oder mit einem Anhänger versehener Traktor sein.

Das Markierungsmittel kann mit dem auf dem Transportmittel abgelegten Fräsgut mit dem Transportmittel abtransportierbar sein.

Das Markierungsmittel kann eine Farbe sein, die auf das auf dem Transportmittel abgelegten Fräsgut aufbringbar ist.

Die Kennzeichnungseinrichtung kann abhängig von den das Fräsgut betreffenden Datensignalen unterschiedliche Farben auf das Fräsgut aufbringen.

Abhängig von den das Fräsgut betreffenden Datensignalen kann beispielsweise bestimmt werden, ob das Fräsgut beispielsweise bestimmte Materialien enthält. Es kann somit mittels der Erfassungseinrichtung bestimmt werden, ob beispielsweise Materialien in dem Fräsgut enthalten sind, die als Sondermüll eingeordnet werden. Abhängig davon kann eine bestimmte Farbe gewählt werden.

Alternativ kann das Markierungsmittel eine mit Markierungsdaten versehene Datenspeichereinrichtung sein.

Die Datenspeichereinrichtung kann eine elektronische Datenspeichereinrichtung sein, auf die die Markierungsdaten von der Kennzeichnungseinrichtung übertragbar sind.

Die Markierungsdaten können die das Fräsgut betreffenden Datensignale sein.

Alternativ kann die Kennzeichnungseinrichtung oder die Erfassungseinrichtung anhand der das Fräsgut betreffenden Datensignale die Markierungsdaten ermitteln.

Die elektronische Datenspeichereinrichtung kann ein Transponder oder ein RFID-Chip sein.

Die Kennzeichnungseinrichtung kann die Markierungsdaten mittels einer drahtlosen Verbindung auf das Markierungsmittel übertragen, wobei das Markierungsmittel die Datenspeichereinrichtung ist.

Die Markierung des Fräsguts kann kontinuierlich erfolgen. Beispielsweise kann das gesamte überladene Fräsgut mit Markierungsmitteln gekennzeichnet werden. Alternativ kann die Kennzeichnung auch nur erfolgen wenn der Beladevorgang kurz vor dem Abschluss steht. Beispielsweise kann die Übertragung eines Markierungsmittels erfolgen wenn der LKW nahezu voll beladen ist, so dass lediglich ein einzelnes Markierungsmittel zur Kennzeichnung des gesamten verladenen Materials dient. Es sind jedoch auch alle Zwischenstufen möglich. So kann jeweils bei Begin oder am Ende der Beladung ein Markierungsmittel vorgesehen sein oder auch beispielsweise pro vorbestimmter Menge, so z.B. je Tonne Fräsgut ein Markierungsmittel.

Die das Fräsgut betreffenden Datensignale können die Materialeigenschaften des Fräsguts betreffen, insbesondere das Material des Fräsguts und/oder Positionsdaten des gefrästen Abschnitts des Bodenbelags sein.

Bezüglich der die Materialeigenschaften des Fräsguts betreffenden Datensignale können dies Datensignale sein, die direkt die Materialeigenschaften des Materials beschreiben oder Datensignale sein, mit denen Rückschlüsse auf das Material gezogen werden können. Daher können auch im Sinne der Erfindung die Ortsdaten des gefrästen Abschnitts des Bodenbelags die Materialeigenschaften des Fräsguts betreffende Datensignale sein. Es kann beispielsweise ermittelt werden, welcher Autobahnabschnitt gefräst wird. Es kann bekannt sein, welches Material in dem Autobahnabschnitt verbaut worden ist, so dass anhand des Autobahnabschnitts ermittelt werden kann welches Material verbaut worden ist.

Es kann beispielsweise bekannt sein, welcher Asphalt verbaut worden ist oder welche Zusammensetzung das verbaute Material hat. Auch kann bekannt sein welches Material in unterschiedlichen Schichten des Bodenbelags verbaut worden ist. Der Bodenbelag weist in der Regel eine Deck-, eine Binder- und eine Tragschicht auf. Die bekannten Informationen bezüglich des Materials können in einer Datenbank (z.B. lokal auf der Fräsmaschine oder außerhalb der Fräsmaschine) hinterlegt sein oder es können diese Informationen von einem Bediener der Fräsmaschine eingegeben werden. Die Ortsdaten können auch anhand von GPS Koordinaten ermittelt werden. Diese die Materialeigenschaften des Fräsguts betreffenden Datensignale können dann von der Erfassungseinrichtung erfasst werden.

Auch können beispielsweise Proben des abgefrästen Materials genommen werden und direkt oder erst später ausgewertet werden. Im Sinne der Erfindung können die die Materialeigenschaften des Fräsguts betreffenden Datensignale auch Datensignale sein, die die Nummer oder den Namen einer solchen Probe betreffen.

Materialeigenschaften des Fräsguts können für die Entsorgung und das Recycling interessant sein. Beispielsweise kann es wichtig sein, dass bekannt ist, ob Teer in dem Fräsgut enthalten ist, da Teer gesondert entsorgt werden muss. Ferner kann für das Recycling das Wissen bezüglich der Bitumenanteile im Fräsgut relevant sein.

Bereits die Information aus welcher Schicht des Straßenaufbaus das Fräsgut stammt kann als Materialeigenschaft von Bedeutung sein. Beispielsweise darf Material aus einer Tragschicht im Zuge einer Wiederverwendung nicht zur Herstellung einer Asphaltmischung verwendet werden, die als Decksicht in einem neuen Straßenaufbau verwendet werden soll. Das Fräsgut, das hingegen aus einer Deckschicht stammt kann zu einer Asphaltmischung aufbereitet werden, als Tragschicht in einem neuen Straßenaufbau verwendet wird.

Die das Fräsgut betreffenden Datensignale können Betriebsparameter der Fräsmaschine sein oder Daten bzw. Datensignale sein, die mithilfe der Betriebsparameter, Ortsdaten oder eingegebener Informationen ermittelt werden. Es können somit sowohl die direkt ermittelten bzw. eingegebenen Daten bzw. Datensignale als auch daraus abgeleiteten Daten als das Fräsgut betreffende Datensignale erfasst werden. Die aus den ermittelten bzw. eingegebenen Daten bzw. Datensignalen abgeleiteten Daten das können auch Informationen darüber darstellen, wie das Fräsgut von der Kennzeichnungseinrichtung zu kennzeichnen ist. Informationen, wie das Fräsgut von der Kennzeichnungseinrichtung zu kennzeichnen ist, können im Sinne der Erfindung somit auch die das Fräsgut betreffenden Datensignale sein.

Betriebsparameter können insbesondere Frästiefe, abgetragenes Fräsvolumen, Vorschubgeschwindigkeit, Fräswalzendrehzahl, Verhältnis zwischen Vorschub und Fräswalzendrehzahl, verwendete Fräswalze, abgegebenes Drehmoment/Leistung des Antriebsmotors der Fräsmaschine oder die während des Fräsprozess zur Kühlung der Fräswerkzeuge zugeführte Wassermenge sein. Darüber hinaus kann erfasst werden, ob die Fräse im Gleichlauf- oder Gegenlauffräsen arbeitet (Drehrichtung der Fräswalze gleich-/gegensinnig zu Drehrichtung der Laufwerke). Die das Fräsgut betreffenden Datensignale können auch Masse und /oder Volumen des auf den LKW verladenen Fräsguts sein.

Mithilfe dieser Betriebsparameter können Daten oder Datensignale ermittelt werden. Dies können Materialeigenschaften des Fräsguts, wie beispielsweise die Korngrößenverteilung im Fräsgut, Feinanteile / Grobanteile sein. Die physischen Eigenschaften können beispielsweise aus dem Verhältnis zwischen Vorschub und Fräswalzendrehzahl oder verwendeter Fräswalze hergeleitet werden.

Weiterhin kann aus den Betriebsparametern, z. B. aus der Frästiefe bestimmt werden, welche Schicht des Bodenbelags gefräst wurde. Der Bodenbelag weist beispielsweise eine Deck-, eine Binder- und eine Tragschicht auf, die in der Regel unterschiedliche Schichtdicken aufweisen. Neben der Frästiefe können beispielsweise auch von der Fräse erfasste Ortsdaten berücksichtigt werden, um zu ermitteln, ob an einer Stelle bereits gefräst wurde. Diese Informationen können korreliert werden, um somit genauere Rückschlüsse auf die gerade gefräste Schicht zu ermöglichen.

Gemäß der vorliegenden Erfindung kann ein Verfahren zum Nachverfolgen von Fräsgut vorgesehen sein, das die folgenden Schritte aufweist:
- Fräsen eines Abschnitts eines Bodenbelags mit einer Fräsmaschine in einem Fräsbetrieb,
- Erfassen von das Fräsgut betreffenden Datensignalen in einer Erfassungseinrichtung.
- Ablegen des während des Fräsbetriebs gefrästen Fräsguts auf einer Ladefläche eines Transportmittels,

Es ist in vorteilhafter Weise vorgesehen, dass die das Fräsgut betreffenden Datensignale von der Erfassungseinrichtung an eine Kennzeichnungseinrichtung übertragen werden und abhängig von den übertragenen, das Fräsgut betreffenden Datensignalen das auf dem Transportmittel abgelegte Fräsgut oder das mit dem Fräsgut beladene Transportmittel von der Kennzeichnungseinrichtung mit einem Markierungsmittel gekennzeichnet wird.

Das Transportmittel kann beispielsweise ein LKW oder mit einem Anhänger versehener Traktor sein.

Das Markierungsmittel kann mit dem auf dem Transportmittel abgelegten Fräsgut mit dem Transportmittel abtransportiert werden.

Das Markierungsmittel kann eine Farbe oder eine Datenspeichereinrichtung sein. Im Folgenden werden unter Bezugnahme auf die Zeichnung Ausführungsbeispiele der Erfindung näher erläutert.

Es zeigen schematisch:
Fig. 1 ein System zum Nachverfolgen von Fräsgut,
Fig. 2 Ausführungsbeispiel gemäß Fig. 1 mit einem Transportmittel an der Ablagestelle.
Fig. 3 ein alternatives Ausführungsbeispiel eines Systems zur Nachverfolgung,
Fig. 4 ein weiteres alternatives Ausführungsbeispiel,
Fig. 5 ein weiteres alternative Ausführungsbeispiel,
Fig. 6 ein weiteres alternatives Ausführungsbeispiel.

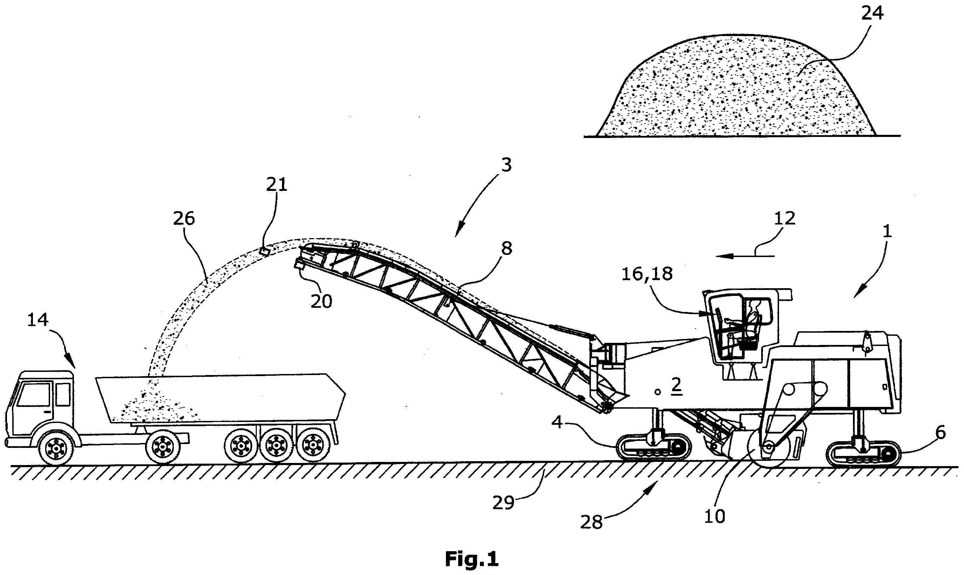

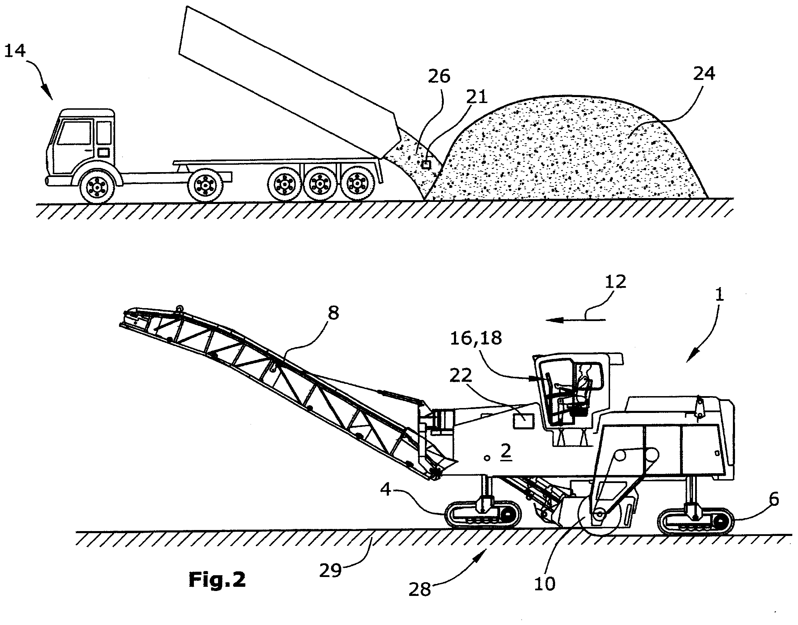

In Fig. 1 ist ein System 3 zum Nachverfolgen von Fräsgut dargestellt. Das System 3 weist eine Fräsmaschine 1 zum Fräsen eines Abschnitts 28 eines Bodenbelags 29 in einem Fräsbetrieb auf. Mittels der Fräsmaschine 1 wird der Bodenbelag 29 gefräst und das abgetragene Fräsgut 26 über zumindest ein Transportband 8 auf ein in den vorliegenden Ausführungsbeispielen als LKW 14 ausgeführtes Transportmittel geladen. Wie in Fig. 2 dargestellt wird, kann das auf den LKW 14 abgeladene Fräsgut 26 an einer Ablagestelle 24 abgelegt werden.

Die Fräsmaschine 1 kann zumindest einen Maschinenrahmen 2 aufweisen. Ferner weist die Fräsmaschine eine höhenverstellbare Fräswalze 10 zum Bearbeiten des Bodenbelags 29 auf, wobei in einem Fräsbetrieb die Fräswalze 10 den Bodenbelag 29 bearbeitet. Die Fräswalze 10 wird von einer Antriebseinheit angetrieben. Die Antriebseinheit ist vorzugsweise ein Antriebsmotor, insbesondere ein Verbrennungsmotor. Die Fräsmaschine 1 weist in Arbeitsrichtung 12 vordere und hintere Fahreinrichtungen 4, 6 auf. Diese Fahreinrichtungen 4, 6 können Räder oder Kettenlaufwerke sein. Die Fahreinrichtungen 4, 6 können über Hubsäulen mit dem Maschinenrahmen 2 verbunden sein. Mit Hilfe der Hubsäulen kann die Fräsmaschine 1 bzw. der Maschinenrahmen 2 relativ zum Bodenbelag 29 höhenverstellt werden. Durch Verstellen der Hubsäulen wird der Maschinenrahmen 2 höhenverstellt und damit wird auch die im Maschinenrahmen 2 gelagerte Fräswalze 10 höhenverstellt. Alternativ oder zusätzlich kann die Fräswalze 10 relativ zum Maschinenrahmen 2 höhenverstellbar sein.

Es ist eine Erfassungseinrichtung 18 dargestellt, mit der das Fräsgut betreffende Datensignale erfasst werden können. Im dargestellten Ausführungsbeispiel ist die Erfassungseinrichtung 18 an der Fräsmaschine 1 angeordnet. Die Erfassungseinrichtung 18 kann das Fräsgut betreffende Datensignale erfassen. Dies können beispielsweise Betriebsparameter der Fräsmaschine 1 sein oder Daten bzw. Datensignale die mithilfe der Betriebsparameter ermittelt werden.

Betriebsparameter können Frästiefe, abgetragenes Fräsvolumen, Frästiefe, Vorschubgeschwindigkeit, Fräswalzendrehzahl, Verhältnis zwischen Vorschub und Fräswalzendrehzahl, verwendete Fräswalze, abgegebenes Drehmoment/Leistung des Antriebsmotors der Fräsmaschine oder zugegebene Wassermenge sein. Darüber hinaus kann erfasst werden, ob die Fräse im Gleichlauf- oder Gegenlauffräsen arbeitet. Anhand dieser Betriebsparameter kann die Menge bzw. das Volumen oder die Masse des abgetragenen Fräsguts ermittelt werden oder auch indirekt Rückschlüsse auf die Materialeigenschaften des Fräsguts gezogen werden. Diese Materialeigenschaften oder ermittelten Daten können als das Fräsgut betreffende Datensignale erfasst werden.

Auch kann die Erfassungseinrichtung 18 weitere, nicht anhand der Betriebsparameter bestimmbare Materialeigenschaften des Fräsguts als das Fräsgut betreffende Datensignale erfassen. Es können beispielsweise die Ortsdaten des gefrästen Abschnitts 28 des Bodenbelags 29 erfasst werden. Es kann bekannt sein, welches Material in diesem Abschnitt 28 verbaut worden ist, so dass anhand der Ortsdaten Rückschlüsse auf das Material gezogen werden können. Zusätzlich oder alternativ können Materialeigenschaften des Fräsguts eingegeben bzw. hinterlegt werden, so dass die Erfassungseinrichtung 18 diese Materialeigenschaften des Fräsguts erfassen kann.

Auch Informationen bezüglich der gerade gefrästen Schicht des Bodenbelags 29 können aus den Betriebsparametern der Fräsmaschine 1 abgeleitet oder eingegeben werden. Diese abgeleiteten oder eingegebenen Informationen können als das Fräsgut betreffenden Datensignale erfasst werden.

Die Betriebsparameter kann die Erfassungseinrichtung 18 über die Steuereinrichtung 16 der Fräsmaschine 1 erfassen. Die Erfassungseinrichtung 18 kann auch extern von der Fräsmaschine 1 angeordnet sein.

Das System 3 zum Nachverfolgen von Fräsgut weist ferner eine Kennzeichnungseinrichtung 20 auf. Die Erfassungseinrichtung 18 überträgt die das Fräsgut betreffenden Datensignale an die Kennzeichnungseinrichtung 20. Die Kennzeichnungseinrichtung 20 kennzeichnet abhängig von den übertragenen, das Fräsgut betreffenden Datensignalen das auf dem LKW 14 abgelegte Fräsgut 26 oder den LKW 14 mit einem Markierungsmittel 21.

Das Markierungsmittel 21 kann eine Datenspeichereinrichtung sein. Auf die Datenspeichereinrichtung können Markierungsdaten übertragen werden. Die Markierungsdaten können die das Fräsgut betreffenden Datensignale sein oder Daten sein, die anhand der das Fräsgut betreffenden Datensignale ermittelt werden. Wie bereits beschrieben können anhand der das Fräsgut betreffenden Datensignale bestimmte Materialien ermittelt werden. Diese Materialien können als Marklerungsdaten beispielsweise auf das als Datenspeichereinrichtung ausgebildete Markierungsmittel 21 übertragen werden. Alternativ kann auch beispielsweise ein daraus abgeleiteter Begriff wie beispielsweise "Sondermüll" auf das Markierungsmittel 21 übertragen werden. Es kann aber auch beispielsweise lediglich eine bestimmte Zahl übertragen werden. In einer nicht dargestellten Dokumentationseinrichtung können dann die das Fräsgut betreffenden Datensignale derart abgespeichert werden, dass diese beispielsweise dieser Zahl zugeordnet werden können.

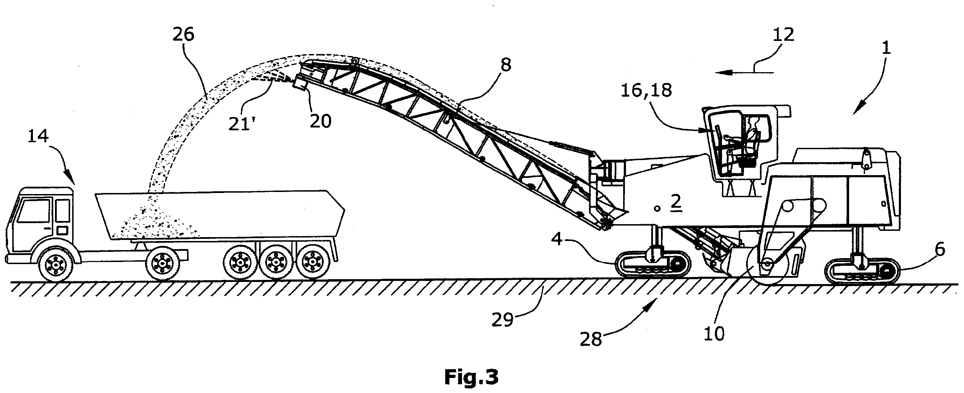

In Fig. 3 ist ein alternatives Ausführungsbeispiel dargestellt. In dem Ausführungsbeispiel gemäß Fig. 3 kennzeichnet die Kennzeichnungseinrichtung 20 das auf dem LKW 14 abgelegte Fräsgut 26 mit einem Markierungsmittel 21'. Das Markierungsmittel 21' kann in dem dargestellten Ausführungsbeispiel eine Farbe sein. Die Kennzeichnungseinrichtung 20 kann abhängig von den das Fräsgut betreffenden Datensignalen unterschiedlich Farben auf das Fräsgut 26 aufbringen.

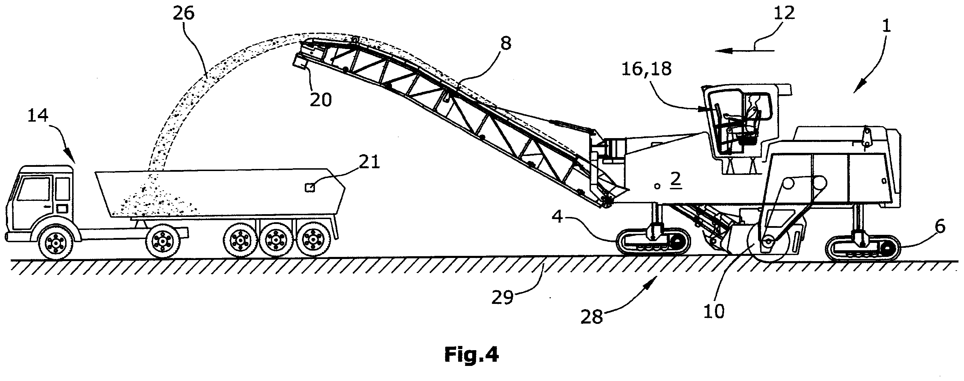

In Fig. 4 ist ein weiteres alternatives Ausführungsbeispiel dargestellt. Im dargestellten Ausführungsbeispiel weist der LKW eine Datenspeichereinrichtung auf. Die Kennzeichnungseinrichtung 20 überträgt Markierungsdaten auf die Datenspeichereinrichtung. Durch Übertragung der Markierungsdaten auf die Datenspeicheinrichtung wird die Datenspeichereinrichtung zu einem Markierungsmittel 21. Auf diese Weise wird der mit dem Fräsgut beladenen LKW 14 mit einem Markierungsmittel 21 markiert. Wenn der LKW 14 zu einer Deponie fährt, kann beispielsweise das Markierungsmittel 21 ausgelesen werden.

Die Kennzeichnungseinrichtung 20 kann auch beispielsweise ein Drucker sein und abhängig von den das Fräsgut betreffenden Datensignalen bestimmte Informationen auf ein Papier drucken. Dieses Papier kann ein Markierungsmittel darstellen, wobei das Markierungsmittel dem mit dem Fräsgut beladenen LKW 14 mitgegeben werden kann und somit den mit dem Fräsgut beladenen LKW 14 kennzeichnet.

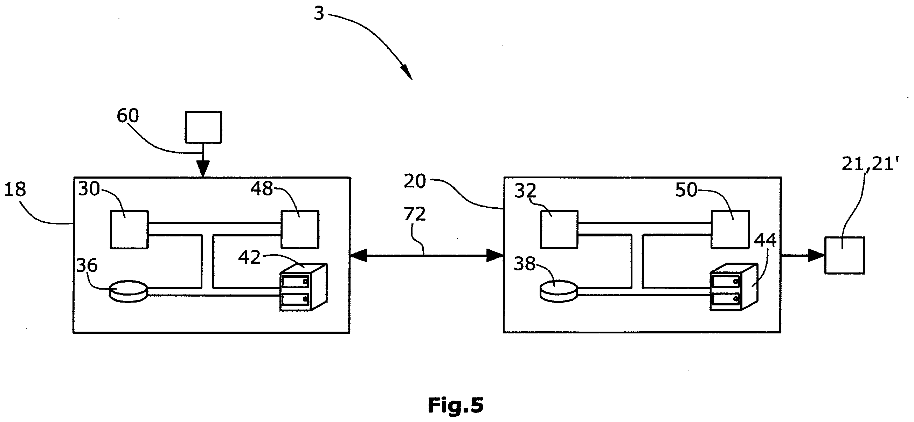

In Fig. 5 ist die Erfassungseinrichtung 18 dargestellt sowie die Kennzeichnungseinrichtung 20. Die Erfassungseinrichtung 18 als auch die Kennzeichnungseinrichtung 20 können Computersysteme sein. Diese können Prozessoren 30, 32 und/oder computerlesbare Speicher 36, 38 und/oder Datenbanken 42, 44 aufweisen. Die Erfassungseinrichtung und/oder die Kennzeichnungseinrichtung 20 können auch ein Benutzerinterface 48,50 aufweisen.

Die Erfassungseinrichtung 18 kann Datensignale 60 erfassen. Die Datensignale 60 können von der Steuereinrichtung 16 erfasst werden oder auch eingegeben werden. Alternativ kann die Erfassungseinrichtung 18 auch die Datensignale 60 von Sensoren der Fräsmaschine 1 direkt empfangen. Aus den Datensignalen 60 kann die Erfassungseinrichtung 18 die das Fräsgut betreffenden Datensignale ermitteln. Umfassen die Datensignale 60 beispielsweise Fräswalzendrehzahl und die Vorschubgeschwindigkeit der Fräsmaschine, so können diese Datensignale 60 mithilfe des Prozessors 30 und/oder Datenbank 42 mit einer Korngrößenverteilung des Fräsguts korreliert werden. Umfassen die Datensignale 60 GPS-Koordinaten die für den gerade gefrästen Abschnitt 28 des Bodenbelags repräsentativ sind, so kann in der Datenbank 42 die Materialeigenschaften des Materials hinterlegt sein welches an diesem Abschnitt 28 vorliegt. Die Erfassungseinrichtung 18 kann die ermittelten Daten oder Datensignale über eine Datenverbindung 72 an die Kennzeichnungseinrichtung 20 übertragen. Alternativ oder zusätzlich können die Datensignale 60 als das Fräsgut betreffende Datensignale an die Kennzeichnungseinrichtung 20 übertragen werden. Die Kennzeichnungseinrichtung 20 kann abhängig von den das Fräsgut betreffenden Datensignalen das auf dem LKW 14 abgelegte Fräsgut oder den mit dem Fräsgut beladenen LKW mit einem Markierungsmittel 21, 21' kennzeichnen.

Abhängig von den das Fräsgut betreffenden Datensignalen kann die Kennzeichnungseinrichtung 20 das Markierungsmittel 21, 21' wählen. Wenn das Markierungsmittel 21, 21' eine Datenspeichereinrichtung ist, kann die Kennzeichnungseinrichtung 20 abhängig von den das Fräsgut betreffenden Datensignalen bestimmte Markierungsdaten auf das Markierungsmittel 21 übertragen. Auf diese Weise kann nachverfolgt werden, welches Fräsgut auf dem entsprechenden LKW abtransportiert wird.

Die Erfassungseinrichtung 18 und die Kennzeichnungseinrichtung 20 können auch als eine Einheit ausgebildet sein.

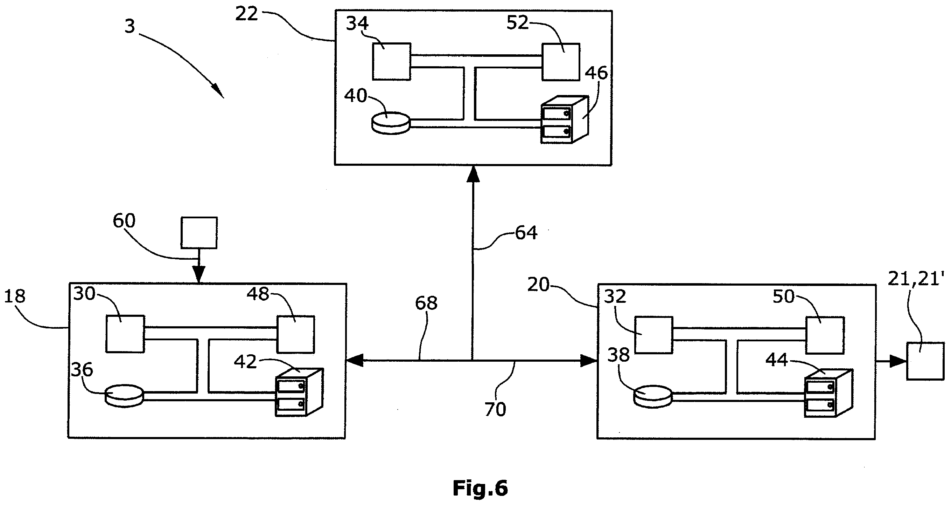

In Fig. 6 ist ein weiteres Ausführungsbeispiel dargestellt. Dieses unterscheidet sich von Fig. 5 dadurch, dass eine Dokumentationseinrichtung 22 vorgesehen ist. In dieser Dokumentationseinrichtung 22 können die das Fräsgut betreffenden Datensignale hinterlegt sein. Auch können Informationen von der Kennzeichnungseinrichtung 20 hinterlegt sein, mit welchem Markierungsmittel 21, 21' das entsprechende abgelegte Fräsgut markiert ist. Diese Informationen bezüglich des Markierungsmittels und die das Fräsgut betreffenden Datensignale können in der Dokumentationseinrichtung 22 verknüpft sein.

Die Dokumentationseinrichtung 22 kann ebenfalls einen Prozessor 34 und/oder einen computerlesbaren Speicher 40 und/oder eine Datenbank 46 und/oder eine IO-Plattform oder Modul 52 aufweisen, welche typischerweise ein Benutzerface aufweist.

## Patentansprüche

1. System (3) zum Nachverfolgen von Fräsgut (26), mit
- einer Fräsmaschine (1) zum Fräsen eines Abschnitts (28) eines Bodenbelags (29) in einem Fräsbetrieb,
- einem Transportmittel (14), das mit dem beim Fräsen des Abschnitts (28) des Bodenbelags (29) abgetragenen Fräsgut (26) beladbar ist und mit dem das abgetragene Fräsgut (26) abtransportierbar ist,
- einer Erfassungseinrichtung (18) zum Erfassen von das Fräsgut betreffender Datensignale,
**dadurch gekennzeichnet,**
**dass** die Erfassungseinrichtung (18) die das Fräsgut (26) betreffenden Datensignale (60) an eine Kennzeichnungseinrichtung (20) überträgt und die Kennzeichnungseinrichtung (20) abhängig von den übertragenen, das Fräsgut (26) betreffenden Datensignalen das auf dem Transportmittel abgelegte Fräsgut (26) oder das mit dem Fräsgut (26) beladene Transportmittel mit einem Markierungsmittel (21) kennzeichnet.

2. System (3) nach Anspruch 1, **dadurch gekennzeichnet, dass** das Markierungsmittel (21) mit dem auf dem Transportmittel abgelegten Fräsgut (26) mit dem Transportmittel abtransportierbar Ist.

3. System (3) nach Anspruch 1 oder 2, **dadurch gekennzeichnet, dass** Markierungsmittel (21) eine Farbe ist, die auf das auf dem Transportmittel abgelegten Fräsgut (26) aufbringbar ist.

4. System (3) nach Anspruch 1 oder 2, **dadurch gekennzeichnet, dass** die Kennzeichnungseinrichtung (20) abhängig von den das Fräsgut (26) betreffenden Datensignalen unterschiedliche Farben auf das Fräsgut (26) aufbringt.

5. System (3) nach Anspruch 1 oder 2, **dadurch gekennzeichnet, dass** das Markierungsmittel (21) eine mit Markierungsdaten versehene Datenspeichereinrichtung ist.

6. System (3) nach Anspruch 5, **dadurch gekennzeichnet, dass** die Datenspeichereinrichtung eine elektronische Datenspeichereinrichtung ist, auf die die Markierungsdaten von der Kennzeichnungseinrichtung (20) übertragbar sind.

7. System (3) nach Anspruch 6, **dadurch gekennzeichnet, dass** die Markierungsdaten die das Fräsgut (26) betreffenden Datensignale sind.

8. System (3) nach Anspruch 6, **dadurch gekennzeichnet, dass** die Kennzeichnungseinrichtung (20) oder die Erfassungseinrichtung (18) anhand der das Fräsgut (26) betroffenen Datensignale die Markierungsdaten ermittelt.

9. System (3) nach einem der Ansprüche 6-8, **dadurch gekennzeichnet, dass** die elektronische Datenspeichereinrichtung ein Transponder oder ein RFID-Chip ist.

10. System (3) nach einem der Ansprüche 6-9, **dadurch gekennzeichnet, dass** die Kennzeichnungseinrichtung (20) die Markierungsdaten mittels einer drahtlosen Verbindung auf das Markierungsmittel überträgt.

11. System (3) nach einem der Ansprüche 1 bis 10, **dadurch gekennzeichnet, dass** die das Fräsgut (26) betreffenden Datensignale die Materialeigenschaften des Fräsguts betreffen, insbesondere Material des Fräsguts und/oder Positionsdaten des gefrästen Abschnitts des Bodenbelags (28) sind.

12. System (3) nach einem der Ansprüche 1 bis 11, **dadurch gekennzeichnet, dass** die den Fräsbetrieb betreffenden Datensignale Betriebsparameter der Fräsmaschine (1) sind, insbesondere Frästiefe oder abgetragenes Fräsvolumen.

13. Verfahren zum Nachverfolgen von Fräsgut (26) durch
- Fräsen eines Abschnitts (28) eines Bodenbelags (29) mit einer Fräsmaschine (1) in einem Fräsbetrieb,
- Ablegen des während des Fräsbetriebs gefrästen Fräsguts (26) auf einer Ladefläche eines Transportmittels,
- Erfassen von das Fräsgut betreffender Datensignale in einer ersten Erfassungseinrichtung (18),
**dadurch gekennzeichnet,**
**dass** die das Fräsgut (26) betreffenden Datensignale von der ersten Erfassungseinrichtung (18) an eine Kennzeichnungseinrichtung (20) übertragen werden und abhängig von den übertragenen, das Fräsgut (26) betreffenden Datensignalen das auf dem Transportmittel abgelegte Fräsgut oder das mit dem Fräsgut (26) beladene Transportmittel von der Kennzeichnungseinrichtung (20) mit einem Markierungsmittel (21) gekennzeichnet wird.

14. Verfahren nach Anspruch 13, **dadurch gekennzeichnet, dass** das Markierungsmittel (21) mit dem auf dem Transportmittel abgelegten Fräsgut (26) mit dem Transportmittel abtransportiert wird.

15. Verfahren nach Anspruch 13 oder 14, **dadurch gekennzeichnet, dass** das Markierungsmittel (21) eine Farbe oder eine mit Markierungsdaten versehene Datenspeichereinrichtung ist.

## Claims

1. System (3) for tracking milling material (26), comprising
- a milling machine (1) for milling a section (28) of a ground pavement (29) in a milling operation,
- a means of transport (14) for loading the milling material (26) and transporting away the milling material (26) removed during milling of the section (28) of the ground pavement (29),
- a detection device (18) for detecting data signals relating to the milling material,
**characterized in that**
the detection device (18) transmits the data signals (60) relating to the milling material (26) to a marking device (20), and **in that** the marking device (20) as a function of the transmitted data signals relating to the milling material (26) marks the milling material (26) deposited on the means of transport or the means of transport loaded with the milling material (26) with a marking means (21).

2. System (3) according to claim 1, **characterized in that** the marking means (21) can be transported away by the means of transport together with the milling material (26) deposited on the means of transport.

3. System (3) according to claim 1 or 2, **characterized in that** the marking means (21) is a colour that can be applied to the milling material (26) deposited on the means of transport.

4. System (3) according to claim 1 or 2, **characterized in that** the marking device (20) can apply various colours to the milling material (26) as a function of the data signals relating to the milling material (26).

5. System (3) according to claim 1 or 2, **characterized in that** the marking means (21) is a data storage device provided with marking data.

6. System (3) according to claim 5, **characterized in that** the data storage device is an electronic data storage device on which the marking data of the marking device (20) can be transmitted.

7. System (3) according to claim 6, **characterized in that** the marking data are the data signals relating to the milling material (26).

8. System (3) according to claim 6, **characterized in that** the marking device (20) or the detection device (18) detects the marking data by means of the data signals relating to the milling material (26).

9. System (3) according to any one of the claims 6-8, **characterized in that** the electronic data storage device is a transponder or an RFID chip.

10. System (3) according to any one of the claims 6-9, **characterized in that** the marking device (20) transmits the marking data on the marking means by means of a wireless connection.

11. System (3) according to any one of the claims 1-10, **characterized in that** the data signals relating to the milling material (26) are data signals relating to the material properties of the milling material, specifically, material properties of the milling material and/or position data of the milled section of the ground pavement (28).

12. System (3) according to any one of the claims 1-11, **characterized in that** data signals relating to the milling operation are operating parameters of the milling machine (1), specifically, milling depth or removed milling volume.

13. Method for tracking milling material (26) by means of
- milling a section (28) of a ground pavement (29) with a milling machine (1) in a milling operation,
- depositing the milling material (26) milled during the milling operation on a loading surface of a means of transport,
- detecting data signals relating to the milling material in a first detection device (18),
**characterized in that**
the data signals relating to the milling material (26) are transmitted from the first detection device (18) to a marking device (20), and **in that** as a function of the transmitted data signals relating to the milling material (26) the milling material deposited on the means of transport or the means of transport loaded with the milling material (26) is marked by the marking device (20) with a marking means (21).

14. Method according to claim 13, **characterized in that** the marking means (21) is transported away by the means of transport together with the milling material (26) deposited on the means of transport.

15. Method according to claim 13 or 14, **characterized in that** the marking device (21) is a colour or a data storage device provided with marking data.

## Revendications

1. Système (3) de suivi de produit de fraisage (26), comprenant
- une fraiseuse (1) destinée à fraiser une partie (28) d'un revêtement de sol (29) lors d'une opération de fraisage,
- un moyen de transport (14), qui peut être chargé avec le produit de fraisage (26) enlevé pendant le fraisage de la partie (28) du revêtement de sol (29) et avec lequel le produit de fraisage retiré (26) peut être emporté,
- un dispositif de détection (18) destiné à détecter des signaux de données relatifs au produit de fraisage, **caractérisé en ce que**
le dispositif de détection (18) transmet les signaux de données (60), relatifs au produit de fraisage (26), à un dispositif de caractérisation (20) et le dispositif de caractérisation (20) caractérise le produit de fraisage (26) ou le moyen de transport, chargé avec le produit de fraisage (26), avec un moyen de marquage (21) en fonction des signaux de données transmis relatifs au produit de fraisage (26).

2. Système (3) selon la revendication 1, **caractérisé en ce que** le moyen de marquage (21) peut être emporté à l'aide du moyen de transport avec le produit de fraisage déposé sur le moyen de transport (26).

3. Système (3) selon la revendication 1 ou 2, **caractérisé en ce que** le moyen de marquage (21) est une couleur qui peut être appliquée sur le produit de fraisage (26) déposé sur le moyen de transport.

4. Système (3) selon la revendication 1 ou 2, **caractérisé en ce que** le dispositif de caractérisation (20) applique des couleurs différentes sur le produit de fraisage (26) en fonction des signaux de données relatifs au produit de fraisage (26).

5. Système (3) selon la revendication 1 ou 2, **caractérisé en ce que** le moyen de marquage (21) est un dispositif de mémorisation de données pourvu de données de marquage.

6. Système (3) selon la revendication 5, **caractérisé en ce que** le dispositif de mémorisation de données est un dispositif de mémorisation de données électronique vers lequel les données de marquage provenant du dispositif de caractérisation (20) peuvent être transférées.

7. Système (3) selon la revendication 6, **caractérisé en ce que** les données de marquage sont les signaux de données relatifs au produit de fraisage (26).

8. Système (3) selon la revendication 6, **caractérisé en ce que** le dispositif de caractérisation (20) ou le dispositif de détection (18) détermine les données de marquage sur la base des signaux de données relatifs au produit de fraisage (26).

9. Système (3) selon l'une des revendications 6 à 8, **caractérisé en ce que** le dispositif de mémorisation de données électroniques est un transpondeur ou une puce RFID.

10. Système (3) selon l'une des revendications 6 à 9, **caractérisé en ce que** le dispositif de caractérisation (20) transmet les données de marquage aux moyens de marquage à l'aide d'une connexion sans fil.

11. Système (3) selon l'une des revendications 1 à 10, **caractérisé en ce que** les signaux de données relatifs au produit de fraisage (26) concernent les propriétés de matière du produit de fraisage, en particulier du matériau du produit de fraisage et/ou des données de position de la partie fraisée du revêtement de sol (28).

12. Système (3) selon l'une des revendications 1 à 11, **caractérisé en ce que** les signaux de données relatifs à l'opération de fraisage (26) sont des paramètres opératoires de la fraiseuse (1), en particulier la profondeur de fraisage ou le volume de fraisage enlevé.

13. Procédé de suivi de produit fraisé (26) par
- fraisage d'une partie (28) d'un revêtement de sol (29) avec une fraiseuse (1) lors d'une opération de fraisage,
- dépôt du produit de fraisage (26), fraisé pendant l'opération de fraisage, sur la surface de chargement d'un moyen de transport,
- détection de signaux de données, relatifs au produit de fraisage, dans un premier moyen de détection (18), **caractérisé en ce que**
les signaux de données relatifs au produit de fraisage (26) sont transmis du premier dispositif de détection (18) à un dispositif de caractérisation (20) et le produit de fraisage déposé sur le moyen de transport ou le moyen de transport chargé avec le produit de fraisage (26) est caractérisé avec un moyen de marquage (21) par le dispositif de caractérisation (20) en fonction des signaux de données transmis relatifs au produit de fraisage (26).

14. Procédé selon la revendication 13, **caractérisé en ce que** le moyen de marquage (21) peut être emporté à l'aide du moyen de transport avec le produit de fraisage déposé sur le moyen de transport (26).

15. Procédé selon la revendication 13 ou 14, **caractérisé en ce que** le moyen de marquage (21) est une couleur ou un dispositif de mémorisation de données pourvu de données de marquage.
